# EUROPEAN PATENT APPLICATION

(11) **EP 4 745 557 A1**
(43) Date of publication of application: **20.05.2026**
(21) Application number: 24213911.1
(22) Date of filing: 19.11.2024
(51) Int. Cl.: G01N 17/04

(54) **ELECTRIC SYSTEM AND CORROSION DETERMINATION METHOD**

(71) Applicant: Hitachi Energy Ltd, 8050 Zürich (CH)
(72) Inventor: Meng, DeLun, Beijing 100018 (CN); Zhang, Hui, Beijing 100101 (CN); Wang, Yang, Beijing 100077 (CN); Yang, XiaoBo, Beijing 100015 (CN); Wozniak, Michal, 91-748 Lódz (PL); Usarek, Krzysztof, 30-716 Kraków (PL)
(74) Representative: Epping - Hermann - Fischer

(57) **Abstract**

In one embodiment, the electric system (1) comprises a static electric induction device (2) and an electric resistance, ER, sensor (3), wherein
- the electric system (1) further comprises a protective coating (4) to protect a component (21, 22, 23, 24, 25) of the electric system (1) from an exterior (A) of the electric system (1),
- the ER sensor (3) comprises a measurement conductor track (31) and a reference conductor track (32),
- the protective coating (4) and the ER sensor (3) are configured to be in direct contact with the exterior (A),
- the reference conductor track (32) is permanently shielded from the exterior (A),
- the measurement conductor track (31) is less shielded from the exterior (A) than the reference conductor track (32), and
- the ER sensor (3) is configured to provide information about a corrosion state of the protective coating (4).

## Description

An electric system is provided. A corrosion determination method using such an electric system is also provided.

Documents US 9 518 915 B2 and CN 106 226 226 B refer to corrosion sensors.

A problem to be solved is to provide an electric system in which damage due to corrosion in a harsh environment can efficiently be avoided.

This object is achieved, inter alia, by an electric system and by a corrosion determination method as defined in the independent claims. Exemplary further developments constitute the subject-matter of the dependent claims.

For example, the electric system is a transformer system comprising a transformer comprising a tank and further comprising a radiator, a conservator tank, a control box and/or a bushing turret. The components of the system exposed to an exterior, like air over sea, are protected with a protective coating. Corrosion of the protective coating is monitored and/or predicted by an electric resistance, ER, sensor which has a protected reference conductor track and a measurement conductor track exposed to or less shielded from the exterior. By means of the ER sensor progress of the corrosion of the protective coating can be detected or estimated, for example.

Using an ER sensor offers a precise and cost-efficient way to provide the information about the corrosion. Using both the reference conductor track and a measurement conductor track allows for improved accuracy.

The corresponding method described herein applies to the on-site ambient corrosivity indication of a transformer, for example.

Corrosion due to the degradation and failure of the protective coating is a risk with high potential for transformer systems during long term service in the field, especially for transformer systems used in harsh and highly corrosive environmental conditions, like used in offshore wind energy plants. The corrosion of the transformer system may lead to serious property loss and further personal injury.

Generally, a protective coating system with relative high corrosion protection level, that is, a combination of an atmospheric corrosivity category with a specified durability of coating system defined in, for example, ISO 12944, is selected for transformer systems according to the specific atmospheric corrosivity category claimed by a customer. However, the actual ambient corrosivity is changing due to the complex and volatile environmental conditions, which may become more serious along with time and may thus lead to failure of the protection for the selected protective coating system on the components of the transformer system. Therefore, detection and indication of the on-site ambient corrosivity considering the durability of the protective coating system is desired to trigger preventive maintenance for the transformer system to avoid potential corrosion damage.

According to ISO 9223, the corrosivity of the atmosphere is divided into six categories which are determined by corrosion rates regarding mass or thickness loss of standard metal coupons after the first-year exposure. However, this method depends on the time-consuming manual measurement and evaluation, which is not cost-effective and impracticable for long term detection in special conditions, like offshore power plants, and to determine the actual ambient corrosivity. A variety of sensors based on different techniques like fiber gratings, capacitance sensors, galvanic sensors, electrical resistance sensors could be used to monitor the corrosion status and determine the atmospheric corrosivity categories.

Thus, described herein is, for example, an electrical system, like the transformer system, having the ER sensor to indicate the on-site corrosion protection level and the potential early failure of the protective coating in same environmental conditions. For example, the ER sensor comprises a sensor probe and a measurement module. The sensor probe comprises a working electrode and a reference electrode. The sensor probe is exposed to the same environmental conditions as the electric system and is connected with the measurement module to measure a characteristic parameter change along with exposure time.

For example, the working electrode and the reference electrode can be made of a same metallic material for a simplified design of the ER sensor. It is possible that the working electrode is directly exposed, meanwhile, the reference electrode is fully covered by insulation material to shield from the environment. Otherwise, one or more working electrodes may be painted with a coating system at a different corrosion protection level separately, meanwhile, the reference electrode is still fully covered by insulation material to be shielded from the environment.

For example, the measurement module is electrically connected to one sensor probe and may optionally be packaged to one transformer component. In one possibility, the measurement module is electrically connected to one or more sensor probes via a wire or also wirelessly. It is possible that the measurement module is powered by battery or by an external circuit with AC or DC power.

The measurement module may be designed to have a remote function. It is possible that the measurement module is connected to one on-site remote device/platform which is part of the electric system. Otherwise, the measurement module may be connected to one on-site remote device/platform which is not part of the electric system.

The measured characteristic parameter of the sensor probe is or includes, for example, an electrical resistance, an electric current, a voltage, a corrosion depth and/or a corrosion rate. By using especially the electrical resistance or an equivalent, precision of the measurement and cost-efficiency can be reached at the same time.

Further, herein described is a transformer function to indicate the on-site corrosion protection level and the potential early failure of the protective coating in same environmental conditions. To achieve this function, for example, the following steps may be done, especially in the stated order:
- performing an in-house accelerated ageing test: for example, the accelerated ageing test according to ISO 12944 is conducted, like a water condensation test, a neutral salt spry test and/or a cyclic ageing test for the sensor probe;
- performing a characteristic parameter test: the characteristic parameter of the sensor probe is measured in real-time during the accelerated ageing test by a standard tester, for example;
- performing correlation build-up: the correlation between the measured characteristic parameter value and the corrosion protection level is determined, and optionally the characteristic parameter threshold of indication/alarming for a selected corrosion protection level are defined;
- establishing test module configuration and calibration: the at least one defined characteristic parameter threshold is set, and calibrating the characteristic parameter test function may be done by the standard tester;
- indicating the corrosion protection level in the field: the corrosion protection level and the potential early failure of the coating in same environmental conditions are indicated by using the electrical system having the ER sensor and the defined threshold.

After exposure in the working environment with the electric system for specific duration, if the alarm of the respective component is trigged when the measured characteristic parameter reached the defined threshold, the on-site corrosion protection level for the working condition can be indicated based on the defined threshold and time of the alarm, for example, the corrosion protection class C3M, C4H or C5VH according to ISO 12944. Upon the alarm, checking the coating system on-site by visual inspection can be done or can be recommended, for example, considering the following:
- if the coating systems on the electric system designed for the same corrosion protection level works well, it can be assumed that the coating system is well qualified; however, the frequency of the visual inspection on the coating system may be increased within the guaranteed time or by an end of the durability range;
- if for the respective component a higher corrosion protection level has been indicated than the customer claimed, meanwhile, the coating system on the electric system works well, that means the coating system is overqualified; however, the frequency of the visual inspection on the coating system may be adapted, for example, increased within the guaranteed time or by an end of the durability range; maintenance and upgrading for the coating system can be done or can be recommended;
- if for the respective component a higher corrosion protection level than the customer claimed has been indicated, meanwhile, the corrosion happens for the coating system on the electric system, that means the coating system needs to be maintained or upgraded to a higher corrosion protection level to avoid further damage.

Hence, with the electric system and the method described herein, the on-site corrosion protection level and the potential early failure of the coating in a same environmental conditions can be indicated. Thus,
- the actual on-site ambient corrosivity can be identified remotely and cost-effectively;
- the reliability of the electric system can be increased with preventive maintenance; and/or
- catastrophic failure and unplanned outage due to corrosion on the electric system can be avoided.

In view of above, the warranty cost for the electric system can potentially be reduced.

In at least one embodiment, the electric system comprises a static electric induction device and an electric resistance, ER, sensor, wherein
- the electric system further comprises a protective coating to protect a component of the electric system from an exterior of the electric system,
- the ER sensor comprises a measurement conductor track and a reference conductor track,
- the protective coating and the ER sensor are configured to be in direct contact with the exterior,
- the reference conductor track is permanently shielded from the exterior,
- the measurement conductor track is less shielded from the exterior than the reference conductor track, and
- the ER sensor is configured to provide information about a corrosion state, including, for xample, at least one of a corrosion progress, an on-site ambient corrosivity or a corrosion protection level, of the protective coating.

For example, the static electric induction device is a transformer so that the electric system could be a transformer system Accordingly, the component may be selected from the following group: transformer tank that may house the transformer, radiator, conservator tank, control box, bushing turret. There can be more than one of said components in the electric system. It is also possible that the electric system comprises more than one static electric induction device, that is, more than one transformer.

However, the static electric induction device, like the transformer, may be supplemented by or replaced with an electric reactor, an instrument transformer, a capacitor, a disconnector, an air-insulated switchgear, AIS, a gas insulated switchgear, GIS, and/or a gas insulated transmission line, GIL. That is, the term 'static electric induction device, may analogously read on any power electronic device configured to handle currents of at least 0.1 kA and/or of at least 3.6 kV, for example. Hence, all the embodiments and examples described herein may not only refer to an electric system comprising the static electric induction device and the ER sensor but in the same manner also to an electric system comprising a power electronic device, like the electric reactor, instrument transformer, capacitor, disconnector, AIS, GIS, and/or GIL, and the ER sensor.

According to at least one embodiment, in an intended use of the electric system the exterior is a gas. For example, the gas comprises oxygen and water vapor. Especially, the gas is air over sea water. Thus, the exterior may also contain one or a plurality of chlorine, sulfur dioxide or sodium. Hence, the ER sensor may provide the corrosion information for the typical environment the electric system is used in.

According to at least one embodiment, the measurement conductor track is configured to be in direct contact with the exterior. The reference conductor track is preferably isolated from the exterior. Especially, the reference conductor track is not in contact with the gas surrounding the electric system. Thus, the measurement conductor track can provide a direct response to the corrosive exterior especially if the exterior and, thus, the corrosive properties change over time.

According to at least one embodiment, the ER sensor further comprises an evaluation unit. The evaluation unit may also be referred to as measurement module. For example, the evaluation unit is electrically connected with the measurement conductor track as well as the reference conductor track. The evaluation unit may determine any one of an electrical resistance, voltage drop, current strength, capacitance and/or inductance of the measurement conductor track as well as the reference conductor track. For this purpose, the evaluation unit may contain means for measuring a current, a voltage, a capacitance and/or an inductance of the measurement conductor track and of the reference conductor track, and may contain means for calculating the information about the corrosion state of the protective coating, like a microprocessor or an integrated circuit, IC, or an application specific integrated circuit, ASIC.

According to at least one embodiment, the ER sensor further comprises a thermometer. If the thermometer is present, an electric resistance of the measurement conductor track as well as the reference conductor track may be determined more exactly. However, if the measurement conductor track as well as the reference conductor track are at a same or a similar temperature in the intended use of the electric system, for example, having the same temperature with tolerance of at most 1°C, then the thermometer may be omitted.

According to at least one embodiment, the thermometer is configured to determine a temperature of at least one of the measurement conductor track or the reference conductor track. By determining only one temperature it may be possible to estimate the other temperature, for example, based on a look-up table or a calibration function. Otherwise, both temperatures may be determined, or a temperature of a substrate at which the measurement conductor track and/or the reference conductor track are applied is determined.

According to at least one embodiment, the evaluation unit is configured to determine a first electrical resistance of the measurement conductor track as well as a second electrical resistance of the reference conductor track. Determining an electrical resistance is considered to be equivalent with determining a voltage drop at the measurement conductor track and/or the reference conductor track at a known current. For example, the current is deemed to be known if the same current runs through both the measurement conductor track and the reference conductor track and if a relative resistance is to be determined. Analogously, a current measurement at a known voltage drop is also considered to be equivalent to a resistance measurement taking into account Ohm's law.

According to at least one embodiment, the evaluation unit is configured to calculate a corrosion indication parameter, the corrosion indication parameter. For example, the corrosion indication parameter includes a quotient of the first electrical resistance and of the second electrical resistance, or may include an absolute value of the first electrical resistance and/or of the second electrical resistance. For example, a rise of the first electrical resistance may be indicative of progressing corrosion.

Especially by using said quotient, calculation is simplified and possible errors may be eliminated or reduced, and the temperature effects on electric resistance can be compensated for .

According to at least one embodiment, the evaluation unit is further configured to output a corrosion status warning when the corrosion indication parameter leaves a predefined range. For example, if the first electrical resistance and/or said quotient exceed a preset limit, then the corrosion status warning is issued.

According to at least one embodiment, the corrosion status warning is indicative of a degree of corrosion of the protective coating. The corrosion status warning may either be a binary value, like corrosion below the preset limit or corrosion above the preset limit, or it may be a value expressing the degree of corrosion in more detail, for example, based on a correlation function or a look-up table using, for example, the first electrical resistance and/or said quotient as the relevant parameter. In case of a binary value, the corrosion status warning can be kept simple. In case of a more gradual information, precision is enhanced.

According to at least one embodiment, at least one of the first electrical resistance or the second electrical resistance is at least 0.1 µΩ or is at least 1 µΩ or is at least 10 µΩ. Alternatively or additionally, said value is at most 100 Ω or is at most 10 Ω or is at most 1 Ω or is at most 0.1 Ω. These values may apply at a beginning of the corrosion, that is, when the electric system is put into operation. However, these values may also apply when corrosion is in progress, for example, when the corrosion status warning is issued. By having said relatively small resistance values, influence of, for example, salt water droplets on the measurement conductor track on the electrical resistance is neglectable as such droplets would have a much larger electrical resistance than the measurement conductor track.

According to at least one embodiment, the first electrical resistance and the second electrical resistance have a same value, for example, within a factor of 2 or within a factor of 1.2 or within a factor of 1.1. These values may apply when the electric system is put into operation and/or when corrosion is in progress, for example, when the corrosion status warning is issued. By having similar resistance values, the calculation effort can be reduced and precision can be increased.

According to at least one embodiment, the measurement conductor track and the reference conductor track are made of a same material, for example, of a same metal. The metal could be, for example, a copper alloy, an iron alloy, a steel, an aluminum alloy. For example, the material is a steel. The measurement conductor track and the reference conductor track could be made of a same thickness and/or diameter, at least when the electric system is put into operation. For example, the measurement conductor track and the reference conductor track are made of a same wire or coating. Thus, the measurement conductor track and the reference conductor track may be different sections of said wire or coating in order to ensure an error-resistant, robust and precise ER sensor.

According to at least one embodiment, the evaluation unit is an integral part of the component. For example, the evaluation unit may not be separated from the component without destroying the evaluation unit. Thus, unintentional removal of the ER sensor can be avoided.

According to at least one embodiment, the evaluation unit and at least one of the measurement conductor track or the reference conductor track are connected with the evaluation unit by means of a wiring. For example, at least two or at least three wires are used to connect the measurement conductor track and the reference conductor track with the evaluation unit to determine, for example, the first and/or second electrical resistances. By using such a wiring, nor battery replacement or the like is needed and any influence of atmospheric changes on a wireless connection can be excluded.

According to at least one embodiment, the measurement conductor track and the reference conductor track are placed on a common substrate. For example, the common substrate is a metallic plate provided with an electrically insulating material on which the measurement conductor track and the reference conductor track are arranged. Otherwise, the common substrate could also be of a dielectric material like a glass or a plastic.

According to at least one embodiment, the reference conductor track is covered by a shielding coating. The shielding coating may be different from the protective coating or the shielding coating and the protective coating are the same. However, it is possible that the shielding coating is not of a same but of a larger thickness than the protective coating.

Especially, the shielding coating may be more resistant to corrosion than the protective coating. Thus, the reference conductor track may be better protected from the environment than the component in order to ensure a reliable measurement by the ER sensor.

According to at least one embodiment, the measurement conductor track is not directly exposed to the environment at least when the electric system is put into operation. Thus, the measurement conductor track can be directly coated or indirectly covered with a cover layer. The cover layer may provide a reduced level of protection compared with the protective coating. For example, the cover layer may be of the same material as the protective coating but with a reduced thickness, or the cover layer is of a less corrosion-resistive material than the protective coating. Thus, corrosion of the measurement conductor track may start some time after putting the electric system into operation. However, when corrosion is in progress, for example, when the corrosion status warning is issued, the measurement conductor track may optionally be directly exposed to the exterior. In other words, the measurement conductor track is optionally painted with a coating system at a lower corrosion protection level separately, meanwhile, the reference conductor track is fully covered by the insulation material to shield it from the environment.

According to at least one embodiment, the substrate, the measurement conductor track, the reference conductor track and the shielding coating as well as the optional cover layer from a package, also referred to as the sensor probe.

According to at least one embodiment, the package is an adhesive label, for example, similar to an RFID label. It is possible that the package is electrically connected with the evaluation unit by an electric wiring or may possibly be connected wirelessly. In the latter case, the package may include an energy source and means for determining the relevant parameter, like the first and/or second electrical resistance. Moreover, a data transmission unit may be present to send the information about the corrosion state to a data receiver based on, for example, Bluetooth or WLAN. It is also possible that the evaluation unit is partially or completely included in the package, especially together with the energy source and/or the data transmission unit. Hence, a cost-efficient and easy-to-apply as well as easy-to-replace sensor arrangement can be achieved.

According to at least one embodiment, the measurement conductor track and/or the reference conductor track comprise one or a plurality of bents, seen, for example, in top view of the substrate. Thus, the measurement conductor track and/or the reference conductor track may be shaped in a meandering manner, either in two dimensions, like a sinuous line or a spiral line, or also in three dimensions, like a coil. It is possible that the measurement conductor track and the reference conductor track have a same shape and/or length.

According to at least one embodiment, the electric system further comprises a remote communication unit, like the data receiver. Moreover, the ER sensor further comprises a transmitter, like the data transmission unit. The transmitter is configured to send the information about the corrosion state of the protective coating to the remote communication unit. Thus, the information about the corrosion state can wirelessly be sent.

According to at least one embodiment, a distance between the remote communication unit and the transmitter is at least 0.1 km or is at least 1 km or is at least 10⁴ m. Alternatively or additionally, said distance may be at most 10⁵ m. Thus, the information about the corrosion state can be sent over a relatively large distance, for example, in case of offshore power plants.

A data connection between the remote communication unit and the transmitter could either be a wireless connection or also a wire-based connection.

According to at least one embodiment, the measurement conductor track and the reference conductor track are electrically contacted in series. In this case, for example, the measurement conductor track and the reference conductor track may be made of the same wire or coating, especially from the same material, with a same geometry and a same size.

According to at least one embodiment, the measurement conductor track and the reference conductor track are distant from the assigned component. Likewise, the package including the measurement conductor track and the reference conductor track can be distant from the assigned component. 'Distant' may mean that there is no line of sight from the assigned component to the measurement conductor track and the reference conductor track or the package solely running through solids and/or that a distance between the assigned component to the measurement conductor track and the reference conductor track or the package is at least 1 cm or is at least 0.1 m or is at least 1 m or is at least 10 m. Thus, the ER sensor and the component can be handled independently of one another.

According to at least one embodiment, the measurement conductor track and the reference conductor track are close to the assigned component. Likewise, the package including the measurement conductor track and the reference conductor track can be close to the assigned component. 'Close to' may mean that there is a line of sight from the assigned component to the measurement conductor track and the reference conductor track or the package solely running through solids and/or that a distance between the assigned component to the measurement conductor track and the reference conductor track or the package is at most 0.1 m or is at most 1 cm or is at most 1 mm. By having such an arrangement, the component and the ER sensor can be kept at the same environmental conditions for an increased precision.

According to at least one embodiment, the electric system comprises a plurality of the components, a plurality of the measurement conductor tracks and assigned ones of the reference conductor tracks, and a plurality of the protective coatings. For example, each one of the components is provided with its own protective coating.

According to at least one embodiment, said protective coatings are of different material compositions and/or thicknesses. In other words, depending on the respective requirements the components can individually be coated with protective coatings. It is possible that the same protective coating is used for at least two of the components.

According to at least one embodiment, said components are each provided with one of the protective coatings, and each of said protective coatings is assigned at least one of the measurement conductor tracks. Hence, the different protective coatings may individually by monitored by the at least one ER sensor.

It is possible that per measurement conductor track and assigned reference conductor track, that is, per sensor probe, there is one evaluation unit, or that one evaluation unit serves a plurality of the measurement conductor tracks and assigned reference conductor tracks, that is, sensor probes.

According to at least one embodiment, the measurement module is electrically connected to one sensor probe and is packaged to one transformer component.

According to at least one embodiment, the measurement module is connected to one on-site remote device or platform which is part of the electric system, or the measurement module is connected to one on-site remote device or platform which is not part of the electric system.

An operating method for the electric system is additionally provided. By means of the method, the electric system as indicated in connection with at least one of the above-stated embodiments can be operated. Features of the electric system are therefore also disclosed for the method and vice versa.

In at least one embodiment, the corrosion determination method is for the electric system and comprises the following steps, for example, in the order given below:
- providing a first one and a second one of the ER sensors,
- performing an accelerated aging test with the first one of the ER sensors in a test exterior and determining the predefined range of the corrosion indication parameter,
- providing the second one of the ER sensors with the predefined range of the corrosion indication parameter, and
- placing the second one of the ER sensors in the electric system?.

For example, the corrosion protection level and the potential early failure of the protective coating in same environmental conditions can be indicated. Thus, corrosion protection level indication in the field by using the ER sensor can be achieved.

For example, said corrosion protection level indication needs to configure the test module by the defined characteristic parameter threshold, and to calibrate the test module for its characteristic parameter test function by a standard tester.

For example, said characteristic parameter threshold is defined by building the correlation between the measured characteristic parameter value during the accelerate aging test and the corrosion protection level.

For example, said accelerate aging test is conducted for the sensor probe, said accelerated ageing test can be used to determine the corrosion protection level of the protective coating. The characteristic parameter of the sensor probe is measured in real-time during the accelerated ageing test by the standard tester.

An electric system and an operating method described herein are explained in greater detail below by way of exemplary embodiments with reference to the drawings. Elements which are the same in the individual figures are indicated with the same reference numerals. The relationships between the elements are not shown to scale, however, but rather individual elements may be shown exaggeratedly large to assist in understanding.

In the figures:
- Figure 1: is a schematic top view of an exemplary embodiment of an electric system described herein,
- Figure 2: is a schematic perspective view of an exemplary embodiment of an electric system described herein,
- Figure 3: is a schematic sectional side view of an exemplary embodiment of an electric system described herein,
- Figures 4 and 5: are schematic top views of exemplary embodiments of electric resistance sensors for electric systems described herein,
- Figure 6: is a schematic top view of an exemplary embodiment of an electric resistance sensor for electric systems described herein, and
- Figures 7 and 8: are schematic block diagrams of exemplary embodiments of operating methods for electric systems described herein.

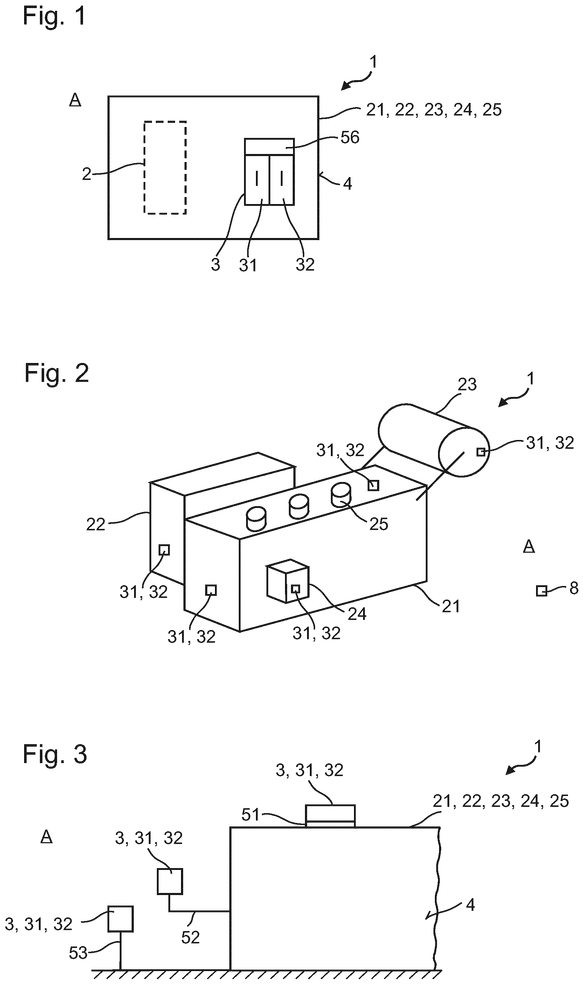

Figure 1 illustrates an exemplary embodiment of an electric system 1. The electric system 1 comprises a static electric induction device 2, for example, a transformer. The static electric induction device 2 may be configured for an electrical power of at least 10 kVA or of at least 0.1 MVA or of at least 1 MVA or at least 10 MVA and/or of at most 0.1 GVA or at most 1 GVA, for example. Further, the electric system 1 comprises one or a plurality of components 21, 22, 23, 24, 25 which may be related to the operation of the static electric induction device 2. By way of example, the component 21 is a transformer tank 21 housing the transformer 2.

The electric system 1 is in an exterior A. For example, the exterior A is air, especially air over seawater. Thus, the exterior A may comprise oxygen, water, chlorine and sodium. Hence, the exterior A may have a relatively high corrosivity for metals like steel.

To protect the at least one component 21, 22, 23, 24, 25 from the exterior A, said component is provided with a protective coating 4. For example, the protective coating 4 is an organic lacquer system or paint system, possibly containing a plurality of layers.

Further, the electric system 1 comprises an electric resistance, ER, sensor 3. The ER sensor 3 has a measurement conductor track 31 and a reference conductor track 32. The measurement conductor track 31 is exposed to or weakly protected from the exterior A while the reference conductor track 32 is isolated from the exterior A. By means of the measurement conductor track 31 and the reference conductor track 32, information about a corrosion state of the protective coating 4, of an on-site ambient corrosivity and/or of a corrosion protection level can be provided, for example, by evaluating the electrical resistances of the measurement conductor track 31 and of the reference conductor track 32.

Optionally, the ER sensor further includes a transmitter 56. By means of the transmitter 56, the information about the corrosion state obtained, for example, by an evaluation unit may wirelessly or also wire-bound be sent to a receiver of the electric system 1 or outside the electric system 1.

In Figure 2, another example of the electric system 1 is shown. In this example, the static electric induction device is the transformer which is housed in the transformer tank 21. At the transformer tank 21, optionally there is a radiator 22 for dissipating waste heat and a conservator tank 23 to handle an insulating liquid the transformer 2 is in, or the radiation 22 is located adjacent to the tank 21 but connected with a piping for the insulating liquid. Further, there can be bushing turrets 25 for DC and AC input lines and output lines. A control box 24 can also be present.

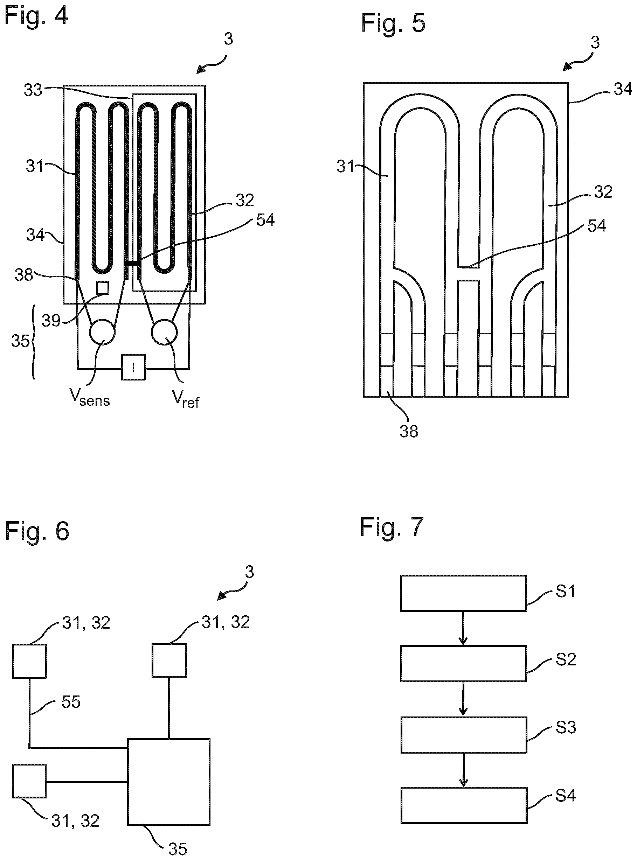

These components 21, 22, 23, 24, 25 may have different requirements concerning the protection level against corrosion. Thus, said components 21, 22, 23, 24, 25 may be provided with different protective coatings, not shown in Figure 2. These different protective coatings may be monitored by a plurality of ER pairs each containing one of the measurement conductor tracks 31 and one of the reference conductor tracks 32, for example. There can be just these ER pairs or there can be full ER sensors, compare Figures 4 to 6 below.

In addition to different protective coatings, there can be a plurality of the ER pairs and/or the ER sensors at the same component, for example, at the transformer tank 2. By means of this arrangement, it can be accounted for that corrosion progresses with different rates at different locations of the transformer tank 21, for example, due to different wind conditions or different exposure to seawater and/or salt. The same applies analogously to all other components 22, 23, 24, 25 of the electric system 1.

As a further option, the electric system 1 may include a remote communication unit 8. It is possible that the remote communication unit 8 is located quite far away from the components 21, 22, 23, 24, 25. For example, a distance between the components 21, 22, 23, 24, 25 and the remote communication unit 8 is at least 1 km or is at least 10 km. For example. The remote communication unit 8 is configured to receive signals from the at least one transmitter 56. Thus, for example, if the transformer 2 and the components 21, 22, 23, 24, 25 are placed offshore, the remote communication unit 8 can be placed onshore so that monitoring of the information about the corrosion state can be done onshore, and offshore work is required only if an alarm is issued by the at least one ER sensor 3 via the at least one transmitter 56 and the remote communication unit 8. Such a remote communication unit 8 and such at least one transmitter 56 can be present in all other examples of the electric system 1 as well.

Otherwise, the same as to Figure 1 may also apply to Figure 2, and vice versa.

In the example of the electric system 1 of Figure 3 it is shown that the overall ER sensors 3 or at least the ER pairs of the measurement conductor tracks 31 and the reference conductor tracks 32 could be attached to the at least one component 21, 22, 23, 24, 25 in various ways.

In a first possibility, the respective ER sensor 3 or ER pair 31, 32 is directly attached to the assigned component 21, 22, 23, 24, 25. For example, there is just a first connection means 51, like an adhesive, between the respective ER sensor 3 or ER pair 31, 32 and the assigned component 21, 22, 23, 24, 25. For example, a distance between the respective ER sensor 3 or ER pair 31, 32 and the assigned component 21, 22, 23, 24, 25 is at most 1 cm or is at most 1 mm. Optionally, there is only solid matter between the respective ER sensor 3 or ER pair 31, 32 and the assigned component 21, 22, 23, 24, 25. For example, the respective ER sensor 3 or ER pair 31, 32 is an adhesive label directly attached onto the protective coating 4 of the assigned component 21, 22, 23, 24, 25.

In a second possibility, the respective ER sensor 3 or ER pair 31, 32 is attached to the assigned component 21, 22, 23, 24, 25 by means of a second connection means 52. For example, the second connection means 52 is a rodding or a bar by means of which the respective ER sensor 3 or ER pair 31, 32 is attached to the assigned component 21, 22, 23, 24, 25. The second connection means 52 may be applied onto the respective protective coating 4 or may be attached to a mechanical contact point of the assigned component 21, 22, 23, 24, 25. By means of such second connection means 52, the respective ER sensor 3 or ER pair 31, 32 can be close at the assigned component 21, 22, 23, 24, 25 and can experience the same environmental conditions of the exterior A but may not interfere with the protective coating 4 or the assigned component 21, 22, 23, 24, 25 itself.

In a third possibility, the ER sensor 3 or ER pair 31, 32 is located distant from the assigned component 21, 22, 23, 24, 25. This can be done, for example, by using a holder 53 which is not in direct contact with the assigned component 21, 22, 23, 24, 25. For example, the holder 53 is attached to the ground or a platform the electric system 1 is mounted on.

These three exemplarily possibilities can in any mixture be present in all the examples of the electric system 1.

Otherwise, the same as to Figures 1 and 2 may also apply to Figure 3, and vice versa.

In Figure 4, an example of the ER sensor 3 is illustrated. In this example, the measurement conductor track 31 and the reference conductor track 32 are made of a same material, for example, a steel wire or a copper wire or an aluminum wire or a coating made of at least one of these materials. For example, the measurement conductor track 31 and the reference conductor track 32 each have a plurality of U-turns, like three U-turns. The measurement conductor track 31 and the reference conductor track 32 may electrically be put in series by means of a connection track 54. By means of the connection track 54 in can be assured that a same current I flows through the measurement conductor track 31 and the reference conductor track 32. Each the measurement conductor track 31 and the reference conductor track 32 can have two electric terminals 38. However, overall three electric terminals 38 may also be sufficient if the two middle one of the electric terminals 38 would be merged. At the two pairs of the electric terminals 38, voltage drops Vsens and Vref at the measurement conductor track 31 and the reference conductor track 32, respectively, could be determined by the evaluation unit 35. Thus, electric resistances of the the measurement conductor track 31 and of the reference conductor track 32 can be determined. For example, these electric resistances are about the same and amount to around 10 µΩ.

The measurement conductor track 31 and of the reference conductor track 32 are applied, for example, on a substrate 34. The substrate 34 is, for example, of an electrically insulating material. To protect the reference conductor track 32 from the exterior A, a shielding coating 33 is applied over the reference conductor track 32. The measurement conductor track 31 can either be directly exposed to the exterior A or there is a less protective additional coating covering the measurement conductor track 31, not shown in Figure 4.

It is possible that the substrate 34 and also the measurement conductor track 31 and the reference conductor track 32 as well as the shielding coating 33 are of mechanical flexible fashion. Thus, the ER sensor 3 could easily be implemented as an adhesive label.

The evaluation unit 35 to determine the electric resistances could be directly attached to the electric terminals 38 and, thus, may also be placed on the substrate 34. However, it is also possible that an electric wiring is located between the electric terminals 38 and the evaluation unit 35, not shown.

As an option, for more accurately measuring the electric resistances, there can be a thermometer 39. For example, the thermometer 39 is placed on the substrate 34 next to the measurement conductor track 31. It is possible that there is a second thermometer 39 next to the reference conductor track 32, not shown. For example, the at least one thermometer 39 is an NTC or a PTC. A temperature determined by the at least one thermometer 39 may be considered by the evaluation unit 35 when determining the electric resistances.

Otherwise, the same as to Figures 1 to 3 may also apply to Figure 4, and vice versa.

According to the example of Figure 5, there are six of the electric terminals 38. Thus, there could be two of the electric terminals 38 for measuring the current I, the voltage Vsens and the voltage Vref, respectively. Moreover, the measurement conductor track 31 and the reference conductor track 32 are made of a same coating on the substrate 34. Again, the measurement conductor track 31 and the reference conductor track 32 are optionally connected by the connection track 54. For example, the measurement conductor track 31 and the reference conductor track 32 may each have only one U-turn. Thus, as in Figure 4, all the electric terminals 38 may be on a single side of the substrate 34, seen in top view of the substrate 34.

For simplicity of the drawing, the other elements of the ER sensor 3 like the shielding coating are not shown in Figure 5.

Otherwise, the same as to Figure 4 may also apply to Figure 5, and vice versa.

In Figure 6 an example of the ER sensor 3 is shown in which there is one evaluation unit 35 which is connected to a plurality of the ER pairs each having one of the measurement conductor tracks 31 and one of the reference conductor tracks 32. Hence, there could be a wiring 55. For example, for each one of the electric terminals 38, compare Figures 4 or 5, there could be a single wire. Otherwise, especially concerning the measurement of the current I, there could be a series connection of the ER pairs.

Otherwise, the same as to Figures 4 and 5 may also apply to Figure 6, and vice versa.

The ER sensors 3 as illustrated in Figures 4 to 6 could each be used in all the examples of the electric system 1 in any combination. Thus, different kinds of the ER sensors 3 may be present within one electric system 1, or all the ER sensors of the respective electric system 1 are of the same kind.

In Figure 7, an example of a corrosion determination method for the electric system 1 of any one of the above examples is schematically illustrated. In a method step S1, a first one 6 and a second one 3 of the ER sensors are provided.

Then, in method step S2, an accelerated aging test with the first one of the ER sensors 6 is performed. This is done, for example, in a test exterior B. By doing so, a predefined range of the corrosion indication parameter, like a quotient of the two electric resistances of the measurement conductor track 31 and of the reference conductor track 32 is determined.

In a subsequent method step S3, the second one of the ER sensors 3 is provided with the predefined range of the corrosion indication parameter.

Then, in method step S4 the second one of the ER sensors 3 is placed in the electric system 1 which is placed in the field.

Otherwise, the same as to Figures 1 to 6 may also apply to Figure 7, and vice versa.

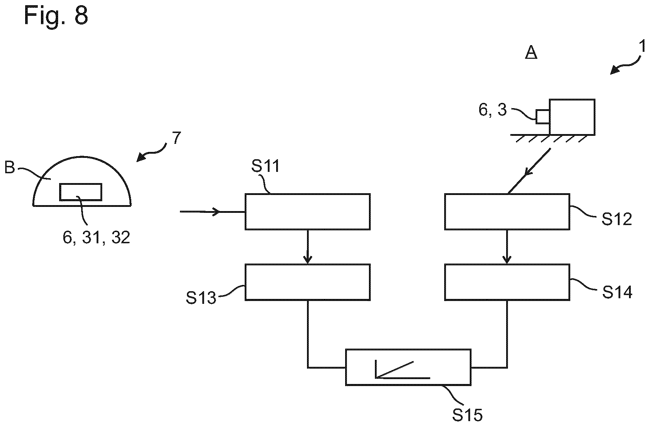

In Figure 8, a more detailed example of the corrosion determination method is illustrated. The ER sensors 3, 6 in this example are, for example, smart labels.

In method step S11, the calibration ER sensor 6 having the measurement conductor track 31 and the reference conductor track 32 is placed in an aging test machine 7. In the aging test machine 7, there is a test exterior B. Optionally, the test exterior B is as similar as possible to the exterior A around the electric system 1 later in the field. An aging test performed in the aging test machine 7 may last, for example, for at least 10² h and for at most 10³ h. During the aging test, the corrosion indication parameter is determined so that a time dependency of the corrosion indication parameter is obtained.

In method step S12, a test of the ER sensor 3 is done in real time and in the field. In method step S14, variations of the corrosion indication parameter of said ER sensor 3 are monitored; method steps S12 and S14 may be performed at the same time. Furthermore, as an option there can be an assigned protective coating, a status of the protective coating over time may be correlated to the corrosion indication parameter, for example, by means of visual inspection or another suitable test to determine the status of the protective coating.

In method step S15, a correlation built-up is performed between the corrosion indication parameter of the ER sensor 3 in the field in the exterior A on the one hand and the calibration ER sensor 6 and/or the result of the visual inspection or the other suitable test on the other hand. Optionally, on the protective coating the accelerated aging test may also be performed, and the status of the coating during the accelerated aging test may be correlated with the corrosion indication parameter of the calibration ER sensor 6.

Optionally, in method step S13 a protection level of the ER sensor and/or of the protective coating may be determined based on the accelerated aging test and/or based on the test in the field in real time.

Otherwise, the same as to Figures 1 to 7 may also apply to Figure 8, and vice versa.

The invention described here is not restricted by the description on the basis of the exemplary embodiments. Rather, the invention encompasses any new feature and also any combination of features, which includes in particular any combination of features in the patent claims, even if this feature or this combination itself is not explicitly specified in the patent claims or exemplary embodiments.

### List of Reference Signs

- 1: electric system
- 2: static electric induction device (transformer)
- 21: transformer tank
- 22: radiator
- 23: conservator tank
- 24: control box
- 25: bushing turret
- 3: electric resistance sensor (ER sensor)
- 31: measurement conductor track
- 32: reference conductor track
- 33: shielding coating
- 34: substrate
- 35: evaluation unit
- 37: track connection
- 38: electric terminal
- 39: thermometer
- 4: protective coating
- 51: first connection means
- 52: second connection means
- 53: holder
- 54: connection track
- 55: wiring
- 56: transmitter
- 6: calibration ER sensor
- 7: aging test machine
- 8: remote communication unit
- A: exterior around the transformer system in the field
- B: test exterior
- 5: method step

## Claims

1. An electric system (1) comprising a static electric induction device (2) and an electric resistance, ER, sensor (3), wherein
- the electric system (1) further comprises a protective coating (4) to protect a component (21, 22, 23, 24, 25) of the electric system (1) from an exterior (A) of the electric system (1),
- the ER sensor (3) comprises a measurement conductor track (31) and a reference conductor track (32),
- the protective coating (4) and the ER sensor (3) are configured to be in direct contact with the exterior (A),
- the reference conductor track (32) is permanently shielded from the exterior (A),
- the measurement conductor track (31) is less shielded from the exterior (A) than the reference conductor track (32), and
- the ER sensor (3) is configured to provide information about a corrosion state of the protective coating (4).

2. The electric system (1) according to the preceding claim, wherein the measurement conductor track (31) is configured to be in direct contact with the exterior (A),
wherein in intended use of the electric system (1) the exterior (A) is a gas comprising oxygen and water vapor, and
wherein the static electric induction device (2) is a transformer and the component is selected from the following group: transformer tank (21), radiator (22), conservator tank (23), control box (24), bushing turret (25).

3. The electric system (1) according to any one of the preceding claims,
wherein the ER sensor (3) further comprises an evaluation unit (35) and a thermometer (39),
wherein the thermometer (39) is configured to determine a temperature of at least one of the measurement conductor track (31) or the reference conductor track (32),
wherein the evaluation unit (35) is configured to determine a first electrical resistance of the measurement conductor track (31) as well as a second electrical resistance of the reference conductor track (32).

4. The electric system (1) according to the preceding claim, wherein the evaluation unit (35) is configured to calculate a corrosion indication parameter, the corrosion indication parameter includes a quotient of the first electrical resistance and of the second electrical resistance,
wherein the evaluation unit (35) is further configured to output a corrosion status warning when the corrosion indication parameter leaves a predefined range, the corrosion status warning being indicative of a degree of corrosion of the protective coating (4).

5. The electric system (1) according to any one of the two preceding claims,
wherein at least one of the first electrical resistance or the second electrical resistance is at least 1 µΩ and at most 100 Ω.

6. The electric system (1) according to any one of the three preceding claims,
wherein the first electrical resistance and the second electrical resistance have a same value, within a factor of 1.2.

7. The electric system (1) according to any one of claims 3 to 6,
wherein the evaluation unit (35) is an integral part of the component (21, 22, 23, 24, 25),
wherein the evaluation unit (35) and at least one of the measurement conductor track (31) and the reference conductor track (32) are connected with the evaluation unit (35) by means of a wiring (55).

8. The electric system (1) according to any one of the preceding claims,
wherein the measurement conductor track (31) and the reference conductor track (32) are placed on a common substrate (34),
wherein the reference conductor track (32) is covered by a shielding coating (33) which is different from the protective coating (4).

9. The electric system (1) according to the preceding claim, wherein the measurement conductor track (31) and the reference conductor track (32) each comprise a plurality of bents, seen in top view of the substrate (34).

10. The electric system (1) according to any one of the preceding claims,
further comprising a remote communication unit (8),
wherein the ER sensor (3) further comprises a transmitter (56),
wherein the transmitter (56) is configured to send the information about the corrosion state of the protective coating (4) to the remote communication unit (8), and wherein a distance between the remote communication unit (8) and the transmitter (56) is at least 10³ m.

11. The electric system (1) according to any one of the preceding claims,
wherein the measurement conductor track (31) and the reference conductor track (32) are electrically contacted in series.

12. The electric system (1) according to any one of the preceding claims,
wherein the measurement conductor track (31) and the reference conductor track (32) are distant from the component (21, 22, 23, 24, 25).

13. The electric system (1) according to any one of claims 1 to 11,
wherein at least one of the measurement conductor track (31) or the reference conductor track (32) are close to the component (21, 22, 23, 24, 25).

14. The electric system (1) according to any one of the preceding claims,
comprising a plurality of the components (21, 22, 23, 24, 25), a plurality of the measurement conductor tracks (31) and assigned ones of the reference conductor tracks (32), and a plurality of the protective coatings (4),
wherein said protective coatings (4) are of different material compositions and/or thicknesses,
wherein said components (21, 22, 23, 24, 25) are each provided with one of the protective coatings (4), and
wherein each of said protective coatings (4) is assigned at least one of the measurement conductor tracks (31).

15. A corrosion determination method for an electric system (1) according to at least claim 4 comprising the following steps:
- providing a first one (6) and a second one (3) of the ER sensors,
- performing an accelerated aging test with the first one of the ER sensors (6) in a test exterior (B) and determining the predefined range of the corrosion indication parameter,
- providing the second one of the ER sensors (3) with the predefined range of the corrosion indication parameter, and
- placing the second one of the ER sensors (3) in the electric system (1).
